# EUROPÄISCHE PATENTANMELDUNG

(11) **EP 4 552 874 A1**
(43) Veröffentlichungstag der Anmeldung: **14.05.2025**
(21) Anmeldenummer: 24204297.6
(22) Anmeldetag: 02.10.2024
(51) Int. Cl.: B60H 1/03, B60H 1/24, B60H 1/00

(54) **TEMPERIERUNGSSYSTEM FÜR EINEN KRAFTWAGEN SOWIE VERFAHREN**

(30) Priorität: 09.11.2023 DE 102023131184
(71) Anmelder: MAGNA STEYR Fahrzeugtechnik GmbH & Co KG, 8041 Graz (AT)
(72) Erfinder: WAGNER, Nicolai, 71155 Altdorf (DE); WAGNER, Oliver, 71155 Altdorf (DE)
(74) Vertreter: Zangger, Bernd

(57) **Zusammenfassung**

Die Erfindung betrifft ein Temperierungssystem (10) für einen Kraftwagen (12), mit wenigstens einer Kabinen-Zulufteinrichtung (14) im Frontbereich (12a) und mit wenigstens einer Ablufteinrichtung (16) im Heckbereich (12) des Kraftwagens, mittels welchen ein erster Luftstrom (L1) aus der Umgebung (13) als Zuluft durch die Kabinen-Zulufteinrichtung (14) in eine Kabine (18) des Kraftwagens (12) zuführbar und als Abluft durch die Ablufteinrichtung (16) zur Schließung eines ersten Luftkreislaufs (A) zurück in die Umgebung (13) abführbar ist, und mit einer im Heckbereich (12b) angeordneten Wärmeübertragungseinrichtung (20), mittels welcher Wärme von der Ablufteinrichtung (16) aufnehmbar und mittels einer angeordneten Wärmepumpe (22) sowie angeordneten und korrespondierenden Wärmeübertragungsleitungen (24) des Temperierungssystems (10) zur Kabinen-Zulufteinrichtung (14) zurückführbar ist, wobei eine weitere Zulufteinrichtung (26) für die Wärmeübertragungseinrichtung (20), zur Aufnahme eines zweiten Luftstroms (L2) aus der Umgebung (13), im Heckbereich (12b) angeordnet ist und der weitere Luftstrom (L2) zur Schließung eines zweiten Luftkreislaufs (B) wieder in die Umgebung (13) abführbar ist. Ferner betrifft die Erfindung ein Verfahren zum Betreiben eines solchen Temperierungssystems (10).

## Beschreibung

Die Erfindung betrifft ein Temperierungssystem für einen Kraftwagen gemäß dem Oberbegriff von Patentanspruch 1. Ferner betrifft die Erfindung ein Verfahren zum Betreiben eines solchen Temperierungssystems.

Ein bei immer mehr Fahrzeugen mit Wärmepumpe verwendeter kombinierter Wärmeübertrager, welcher in der Funktion eines Kondensators, der im Sommerfall Wärme an die Umgebung abgeben kann, sowie eines Verdampfers, der im Winterfall Wärme aus der Umgebung aufnehmen kann, wird beim Stand der Technik überwiegend in der Fahrzeugfront positioniert.

Soll nun zusätzlich in der dafür günstigen Betriebssituation die Restwärme in der Kabinenluft genutzt werden, wird dafür nach der Patentschrift DE 10 2020 006 417 A1 ein weiterer Wärmeübertrager im Fahrzeugheck benötigt.

Die Aufgabe der Erfindung besteht darin, die Nutzung eines Wärmeübertragers besonders effizient zu gestalten, insbesondere hinsichtlich der Positionierung und der von dieser Positionierung abhängigen Vorteile.

Diese Aufgabe wird mittels eines Temperierungssystems mit den Merkmalen des Patentanspruchs 1 sowie mittels eines erfindungsgemäßen Verfahrens gelöst. Vorteilhafte Ausgestaltungen des erfindungsgemäßen Temperierungssystems sind als vorteilhafte Ausführungsformen des erfindungsgemäßen Verfahrens anzusehen, wobei die Mittel des Temperierungssystems zur Durchführung der Verfahrensschritte eingesetzt sind. Ferner sind vorteilhafte Weiterbildungen der Erfindung durch die abhängigen Patentansprüche, die folgende Beschreibung sowie durch die Figuren beschrieben.

Ein Aspekt der Erfindung betrifft ein Temperierungssystem für einen Kraftwagen, insbesondere für einen Personenkraftwagen, insbesondere für einen elektrisch betreibbaren Personenkraftwagen, mit wenigstens einer Kabinen-Zulufteinrichtung im Frontbereich und mit wenigstens einer Ablufteinrichtung im Heckbereich des Kraftwagens, mittels welchen ein erster Luftstrom aus der Umgebung als Zuluft durch die Kabinen-Zulufteinrichtung in eine Kabine des Kraftwagens zuführbar und als Abluft durch die

Ablufteinrichtung zur Schließung eines ersten Luftkreislaufs zurück in die Umgebung abführbar ist, und mit einer im Heckbereich angeordneten Wärmeübertragungseinrichtung, mittels welcher Wärme von der Ablufteinrichtung aufnehmbar und mittels einer angeordneten Wärmepumpe sowie angeordneten und korrespondierenden Wärmeübertragungsleitungen des Temperierungssystems zur Kabinen-Zulufteinrichtung zurückführbar ist.

Um die Aufgaben der Erfindung zu lösen, ist es vorgesehen, dass eine weitere Zulufteinrichtung für die Wärmeübertragungseinrichtung zur Aufnahme eines zweiten Luftstroms aus der Umgebung im Heckbereich angeordnet ist und der weitere Luftstrom zur Schließung eines zweiten Luftkreislaufs wieder in die Umgebung abführbar ist. Demnach ist es vorgesehen, dass eine Wärmeübertragung in einem Temperierungssystem für Kraftwagen, insbesondere für elektrisch betriebene Personenkraftwagen, bereitzustellen und zu verbessern bzw. wenigstens teilweise zu optimieren. Hierzu sind verschiedene Komponenten und Funktionalitäten miteinander verknüpft, um einen effizienten Temperierungsprozess zu ermöglichen.

Das Temperierungssystem umfasst zunächst die Kabinen-Zulufteinrichtung, die sich im Frontbereich des Kraftwagens befindet. Diese Zulufteinrichtung ermöglicht es, einen ersten Luftstrom aus der Umgebung als Zuluft in die Kabine des Kraftwagens zu leiten. Gleichzeitig gibt es eine Ablufteinrichtung im Heckbereich des Kraftwagens, die dazu ausgebildet ist, die Abluft aus der Kabine abzuführen und somit den ersten Luftkreislauf zu schließen, indem die Abluft wieder in die Umgebung entlassen wird.

Es jedoch vorgesehen, dass in der gezielten Positionierung einer weiteren Zulufteinrichtung im Heckbereich des Fahrzeugs eng mit der Wärmeübertragungseinrichtung verknüpft, ein zweiter Luftstrom aus der Umgebung aufgenommen wird, der separat von der ersten Zulufteinrichtung und dem ersten Luftkreislauf behandelt wird. Dieser zweite Luftstrom kann ebenfalls wieder in die Umgebung abgeführt werden, um den zweiten Luftkreislauf zu schließen.

Die Wärmeübertragungseinrichtung, die sich ebenfalls im Heckbereich des Kraftwagens befindet, ist so konzipiert, dass Wärme aus der Ablufteinrichtung aufnehmbar und diese Wärme effizient nutzbar ist bzw. genutzt werden kann. Dies wird mithilfe einer korrespondierenden Wärmepumpe und eines Netzwerks von Wärmeübertragungsleitungen ermöglicht, die die aufgenommene Wärme zur Kabinen-Zulufteinrichtung zurückführen.

Die Verbindung der weiteren Zulufteinrichtung mit der Wärmeübertragungseinrichtung ist hierbei dazu gedacht, den zweiten Luftstrom aus der Umgebung von dieser weiteren Zulufteinrichtung aufzunehmen, dadurch entsteht ein separater, zweiter Luftkreislauf. Dieser zweite Luftstrom kann entweder für den Wärmepumpenbetrieb genutzt werden, wenn die Kabine noch kalt ist und keine Restwärme aus der Abluft zur Verfügung steht, oder er kann für den Kühlbetrieb verwendet werden, bei dem die Wärmeübertragungseinrichtung als Kondensator dient und Wärme an die Umgebung abgibt.

In einer vorteilhaften Ausführungsform der Erfindung ist es geplant, dass der zweite Luftstrom, der durch die zusätzliche Zulufteinrichtung aufgenommen wird, durch die Ablufteinrichtung im Heckbereich des Kraftwagens in die Umgebung abgeleitet werden kann. Dies ermöglicht eine gezielte Entfernung des zweiten Luftstroms aus dem Temperierungssystem, insbesondere, wenn er nicht mehr benötigt wird.

Weiterhin ist in einer weiteren vorteilhaften Ausgestaltung der Erfindung ein Ausgang für die Luftströme an der Ablufteinrichtung in Fahrzeuglängsrichtung nach hinten gerichtet positioniert. Diese Positionierung gewährleistet eine effiziente Ableitung der Luftströme aus dem Kraftwagen.

Zusätzlich ist in einer weiteren vorteilhaften Ausführungsform der Erfindung geplant, dass ein Eingang für den zweiten Luftstrom an der zusätzlichen Zulufteinrichtung für die Wärmeübertragungseinrichtung am Unterboden des Kraftwagens angeordnet ist. Diese Anordnung ermöglicht eine geeignete Aufnahme von Umgebungsluft für den Temperierungskreislauf und trägt zur Optimierung der Wärmenutzung bei.

In einer weiteren vorteilhaften Variante der Erfindung ist ein Eingang für den zweiten Luftstrom an der zusätzlichen Zulufteinrichtung für die Wärmeübertragungseinrichtung im Bereich eines Antriebsstrangs des Kraftwagens positioniert. Dies eröffnet die Möglichkeit, die Abwärme des Antriebsstrangs effizient zu nutzen und zur Temperierung beizutragen. In noch einer vorteilhaften Ausgestaltung der Erfindung ist es vorgesehen, dass ein Eingang für den zweiten Luftstrom an der zusätzlichen Zulufteinrichtung für die Wärmeübertragungseinrichtung in Form von Einlassöffnungen an der Außenhaut des Kraftwagens gestaltet sind. Diese Anordnung ermöglicht es, Umgebungsluft direkt von außen in den Temperierungskreislauf gelangen zu lassen und trägt zur optimierten Aufnahme von Frischluft bei.

Es ist ebenfalls von Vorteil, zwischen der Kabine und der Ablufteinrichtung eine erste Klappe eines Klappensystems anzuordnen. Diese Klappe kann geöffnet oder geschlossen werden, um den Luftstrom zwischen der Kabine und der Abluft zu steuern und somit die Temperierung anzupassen.

Des Weiteren ist in einer vorteilhaften Ausführungsform der Erfindung eine zweite Klappe des Klappensystems zwischen der zusätzlichen Zulufteinrichtung für die Wärmeübertragungseinrichtung und der Ablufteinrichtung positioniert. Diese zweite Klappe ermöglicht die Kontrolle des Luftstroms zwischen der Umgebung und der Wärmeübertragungseinrichtung. Das Klappensystem bietet die Möglichkeit, die Luftkreisläufe je nach den ausgewählten Betriebsmodi einzeln oder in Kombination anzuwenden. Dies erhöht die Flexibilität des Temperierungssystems erheblich und ermöglicht eine präzise Anpassung der Temperierung an die aktuellen Bedürfnisse und die äußeren Bedingungen.

Schließlich ist es in einer weiteren vorteilhaften Ausgestaltung der Erfindung vorgesehen, dass der zweite Luftstrom mittels der zusätzlichen Zulufteinrichtung für die Wärmeübertragungseinrichtung aus der Umgebung des Kraftwagens im Heckbereich aufgenommen und zur Schließung eines zweiten Luftkreislaufs wieder in die Umgebung abgeführt wird. Diese Konfiguration ermöglicht eine gezielte Erfassung von Umgebungsluft für den Temperierungskreislauf und trägt zur Verbesserung der Temperierungseffizienz bei.

Ein weiterer Aspekt betrifft ein Verfahren zum Betreiben eines Temperierungssystems nach dem vorherigen Aspekt, wobei ein zweiter Luftstrom mittels einer weiteren Zulufteinrichtung für die Wärmeübertragungseinrichtung aus der Umgebung des Kraftwagens im Heckbereich aufgenommen und zur Schließung eines zweiten Luftkreislaufs wieder in die Umgebung abgeführt wird.

In anderen Worten betrifft der Kern der Erfindung somit die optimierte Positionierung eines Wärmeübertragers bzw. einer Wärmeübertragungseinrichtung in Form eines kombinierten Kondensators bzw. Verdampfers in das Fahrzeugheck, welche dort die effizienzsteigernde Rückgewinnung der Restwärme aus der Kabinenabluft, die Nutzung von Umgebungswärme für den Wärmepumpenbetrieb sowie die Abgabe von Wärme an die Umgebung im Kühlbetrieb ermöglicht.

Im Rahmen dieser Erfindung sollen nun jener bei den meisten Fahrzeugen bereits vorhandene Wärmeübertrager aus der Fahrzeugfront in das Fahrzeugheck und somit in die unmittelbare Umgebung der Kabinenentlüftungsöffnungen umpositioniert werden.

Über Luftkanäle und Luftregelklappen kann dieser nun entweder in Kabinenluft, in Umgebungsluft oder in einer Mischluft aus beiden Fällen betrieben werden.

Die Bereitstellung dieser verschiedenen Betriebsmodi ist wichtig, da so ein Wärmepumpensystem auch betreiben werden kann, solange die Kabine noch kalt ist und daher keine Restwärmenutzung verfügbar ist. Außerdem kann dadurch weiterhin ein Kühlbetrieb im Sommer umgesetzt werden, bei welchem der Wärmeübertrager im Heck als Kondensator fungiert und Wärme an die Umgebung abgibt. Eine zusätzliche Verlegung von weiteren Wärmeübertragern, z.B. Wasserkühler des Fahrzeugs in die Position im Fahrzeugheck, ist ebenfalls denkbar. Ein Aktivlüfter unterstützt dabei in jedem Betriebsmodus bedarfsgerecht den Luftstrom durch den oder die Wärmeübertrager. Die Anzahl und Positionierung der Luftregelklappen in den Luftkanälen kann dabei gemäß dem gewünschten Umfang der Anwendung variiert werden.

Die Zuluft aus der Umgebung kann über Öffnungen in der Außenhaut des Fahrzeugs erfolgen, z.B. am Unterboden oder an den Seitenwänden. Auch eine Ansaugung der Luft aus dem Bereich des Antriebsstrangs könnte möglich sein, um zusätzlich dort zu erwartende Abwärme nutzbar zu machen. Die Abluft aus dem oder den Wärmeübertragern soll in solcher Weise aus dem Fahrzeug geführt werden, sodass der bei höheren Fahrtgeschwindigkeiten entstehende Unterdruck am Fahrzeugheck den Luftstrom begünstigt und so den Betrieb des Aktivlüfters entlastet. Die für diese Erfindung benötigten Entlüftungsöffnungen im Fahrzeugheck stellen dabei mit größter Wahrscheinlichkeit auch das auffälligste Merkmal dar, welches von außen beobachtet werden kann, um das Vorhandensein dieser Erfindung nachzuweisen.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: eine mögliche Ausgestaltung eines erfindungsgemäßen Temperierungssystems für einen Kraftwagen anhand eines schematischen Querschnitts des Kraftwagens; und
- Fig. 2: einen Heckbereich des Kraftwagens zur Veranschaulichung eines möglichen Klappensystems des Temperierungssystems.

In den Figuren sind gleiche und funktionsgleiche Elemente mit den gleichen Bezugszeichen versehen.

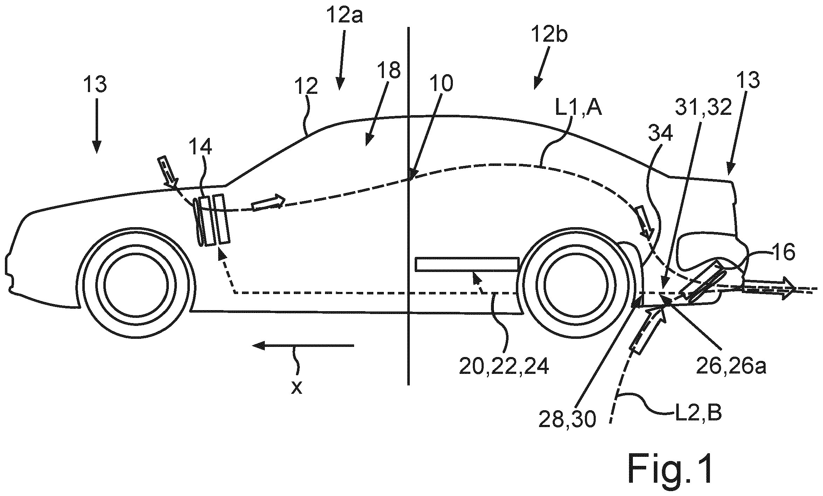

Die Fig. 1 zeigt ein Temperierungssystem 10 für einen Kraftwagen 12, das verschiedene Komponenten und Merkmale aufweist, um die Temperierung der Kabine 18 des Kraftwagens 12 zu ermöglichen. Das System umfasst eine Kabinen-Zulufteinrichtung 14 im Frontbereich 12a des Kraftwagens 12 und eine Ablufteinrichtung 16 im Heckbereich 12b. Durch diese Einrichtungen kann ein erster Luftstrom L1 aus der Umgebung 13 als Zuluft in die Kabine 18 gelangen und als Abluft durch die Ablufteinrichtung 16 wieder in die Umgebung 13 abgeführt werden. Eine Wärmeübertragungseinrichtung 20 ist im Heckbereich 12b des Kraftwagens 12 angeordnet und dient dazu, Wärme von der Ablufteinrichtung 16 aufzunehmen. Zusätzlich sind eine Wärmepumpe 22 und korrespondierende Wärmeübertragungsleitungen 24 im Temperierungssystem 10 angeordnet. Diese ermöglichen es, die aufgenommene Wärme von der Ablufteinrichtung 16 zurück zur Kabinen-Zulufteinrichtung 14 zu führen.

Eine weitere Zulufteinrichtung 26 ist ebenfalls im Heckbereich 12b angeordnet und ist dazu ausgebildet, einen zweiten Luftstrom L2 aus der Umgebung 13 aufzunehmen. Dieser zweite Luftstrom L2 kann entweder durch die Ablufteinrichtung 16 in die Umgebung 13 des Heckbereichs 12b abgeführt werden oder in den Temperierungskreislauf einbezogen werden.

Das in der Fig. 1 dargestellte Temperierungssystem 10 für einen Kraftwagen 12 umfasst zwei Luftkreisläufe A, B. Ein erster Luftkreislauf A bzw. Kabinenluftkreislauf ist in erster Linie dazu ausgebildet, die Temperierung der Kabine 18 bereitzustellen. Dieser erste Luftkreislauf A beginnt mit der Kabinen-Zulufteinrichtung 14 im Frontbereich des Kraftwagens 12. Diese Einrichtung ermöglicht es, frische Außenluft aus der Umgebung 13 in die Kabine 18 zu leiten. Dabei wird die zugeführte Luft bzw. der erste Luftstrom L1 bspw. gefiltert und gegebenenfalls vorkonditioniert, um diese/diesen auf eine angenehme Temperatur zu bringen. Der erste Luftstrom L1 gelangt dann in die Kabine 18, in welcher sie den Fahrzeuginsassen zur Verfügung steht. Hierbei kann die Temperatur und Luftqualität durch das Temperierungssystem 10 reguliert werden. Bei Bedarf kann warme oder kalte Luft in die Kabine 18 geblasen werden, um den Komfort der Insassen zu gewährleisten. Nachdem die Luft die Kabine 18 durchströmt hat und ihre Wärme abgegeben hat, wird sie durch die Ablufteinrichtung 16 im Heckbereich 12b des Kraftwagens 12 abgeführt. Die Abluft wird in der Regel aus der Kabine 18 entfernt, um Platz für frische Zuluft bereitzustellen. Dieser Prozess schließt den ersten Luftkreislauf A ab.

Der zweite Luftkreislauf B zielt darauf ab, die Wärme, die in der Umgebungsluft vorhanden ist, optimal zu nutzen. Dieser zweite Luftkreislauf B beginnt mit der weiteren Zulufteinrichtung 26, die im Heckbereich 12b des Kraftwagens positioniert ist. Hier wird Umgebungsluft bzw. ein zweiter Luftstrom L2 aus der Umgebung 13 aufgenommen, die nicht notwendigerweise in die Kabine 18 gelangen muss.

Die aufgenommene Umgebungsluft bzw. der zweite Luftstrom L2 kann für verschiedene Zwecke verwendet werden. Bspw. kann ein Wärmepumpenbetrieb vorgesehen sein. Wenn die Kabine 18 bspw. noch kalt ist und keine Restwärme aus der Abluft zur Verfügung steht, kann die Wärmepumpe 22 im Temperierungssystem 10 aktiviert werden. Der zweite Luftstrom L2 wird durch die Wärmeübertragungseinrichtung 20 geleitet, um Wärme aufzunehmen. Diese Wärme kann dann genutzt werden, um die Zuluft in der Kabine 18 zu erwärmen, was den Energieverbrauch reduziert.

Im Sommer hingegen kann der zweite Luftkreislauf B verwendet werden, um die Ablufteinrichtung 16 im Heckbereich 12b des Kraftwagens 12 als Kondensator zu nutzen. In diesem Modus gibt die Wärmeübertragungseinrichtung 20 die von Kabine 16 und/oder sonstigen Fahrzeugsystemen aufgenommene Wärme an die Umgebung 13 ab, wodurch die Temperatur im Kraftwagen 12 und/oder in den sonstigen Fahrzeugsystemen reduziert wird. Die dadurch gegebene Flexibilität, die durch die Integration von zwei Luftkreisläufen A und B geboten wird, ermöglicht eine effiziente Temperierung der Kabine 18 und/oder sonstigen Fahrzeugsystemen in verschiedenen Betriebsmodi und Witterungsbedingungen. Dies trägt nicht nur zur Steigerung des Komforts der Insassen bei, sondern hilft auch, den Energieverbrauch des Kraftwagens zu verbessern bzw. zu optimieren.

Es ist wichtig zu beachten, dass es einen Ausgang für die Luftströme L1 und L2 an der Ablufteinrichtung 16 gibt, der in Fahrzeuglängsrichtung x nach hinten gerichtet ist. Dies ermöglicht die effiziente Ableitung der Luftströme aus dem Kraftwagen 12. Der Eingang 26a für den zweiten Luftstrom L2 an der weiteren Zulufteinrichtung 26 für die Wärmeübertragungseinrichtung 20 ist am Unterboden 28 des Kraftwagens 12 angeordnet. Dies ermöglicht hierbei eine geeignete Aufnahme von Umgebungsluft für den Temperierungskreislauf. Es ist auch möglich, dass ein Eingang 26a für den zweiten Luftstrom L2 an der weiteren Zulufteinrichtung 26 für die Wärmeübertragungseinrichtung 20 im Bereich des Antriebsstrangs 30 des Kraftwagens 12 angeordnet ist. Dadurch kann die Abwärme des Antriebsstrangs genutzt werden. Des Weiteren könnte ein Eingang 26a für den zweiten Luftstrom L2 an der weiteren Zulufteinrichtung 26 in Form von Einlassöffnungen 31 in der Außenhaut 32 des Kraftwagens 12 gestaltet sein. Dies würde ermöglichen, dass Umgebungsluft direkt von außen in den Temperierungskreislauf gelangt.

Zwischen der Kabine 18 und der Ablufteinrichtung 16 kann eine erste Klappe 36 eines Klappensystems 34 angeordnet sein. Diese Klappe 36 kann geöffnet oder geschlossen werden, um den zweiten Luftstrom L2 zwischen der Kabine 18 und der Ablufteinrichtung zu steuern. Ebenso kann zwischen der weiteren Zulufteinrichtung 26 für die Wärmeübertragungseinrichtung 20 und der Ablufteinrichtung 16 eine zweite Klappe 38 des Klappensystems 34 angeordnet sein. Diese zweite Klappe 38 ermöglicht die Kontrolle des zweiten Luftstroms L2 zwischen der Umgebung 13 und der Wärmeübertragungseinrichtung 20. Das Klappensystem 34 ermöglicht somit, die Luftkreisläufe A und B in Abhängigkeit von ausgewählten Betriebsmodi einzeln oder in Kombination zu regeln. Dies bietet Flexibilität bei der Temperierung der Kabine 18 und der Nutzung der Wärmeübertragungseinrichtung 20.

Zusammenfassend ermöglicht das Temperierungssystem 10 die effiziente Temperierung der Kabine 18 eines Kraftwagens 12 durch eine praktische Positionierung eines Wärmeübertragers im Heckbereich 12b des Kraftwagens 12. Dieser Wärmeübertrager kann in verschiedenen Betriebsmodi betrieben werden, um die Temperierung je nach Bedarf zu steuern. Die Nutzung von Umgebungsluft und die Rückgewinnung von Restwärme aus der Abluft tragen zur Energieeffizienz des Systems bei.

In anderen Worten werden beide Luftkreisläufe A und B sowie ihrer jeweiligen Komponenten in diesem Temperierungssystem 10 für eine umfangreiche Temperierungsverbesserung genutzt.

Ein entscheidendes Merkmal dieses Temperierungssystems 10 ist die effiziente Ableitung der Luftströme L1 und L2 aus dem Kraftwagen 12. Dies wird durch den Ausgang an der Ablufteinrichtung 16 erreicht, der in Fahrzeuglängsrichtung x nach hinten gerichtet ist. Diese gezielte Ausrichtung ermöglicht es, die Luftströme L1, L2 effektiv und bspw. ohne Stauungen in der unmittelbaren Umgebung 13 des Kraftwagens 12 abzuleiten.

Der Eingang 26a für den zweiten Luftstrom L2 an der weiteren Zulufteinrichtung 26 für die Wärmeübertragungseinrichtung 20 befindet sich am Unterboden 28 des Kraftwagens. Diese Positionierung ist bewusst gewählt, um sicherzustellen, dass Umgebungsluft effizient aufgenommen werden kann. Der Unterboden 28 bietet einen idealen Zugang zu Umgebungsluft, was insbesondere für den Wärmepumpenbetrieb und die Temperierung notwendig ist.

Eine alternative Anordnung besteht darin, den Eingang 26a für den zweiten Luftstrom L2 im Bereich des Antriebsstrangs 30 des Kraftwagens 12 anzuordnen bzw. zu platzieren. Diese Positionierung ermöglicht es, die Abwärme des Antriebsstrangs 30 gezielt zu nutzen und in den Temperierungskreislauf einzubeziehen.

Eine weitere Möglichkeit besteht darin, den Eingang 26a für den zweiten Luftstrom L2 in Form von Einlassöffnungen 31 in der Außenhaut 32 des Kraftwagens zu gestalten. Dies würde bedeuten, dass Umgebungsluft direkt von außen in den Temperierungskreislauf gelangt, was eine besonders effiziente Aufnahme ermöglicht.

Ferner ist ein Klappensystem 34 möglich. Zwischen der Kabine 18 und der Ablufteinrichtung 16 befindet sich eine erste Klappe 36. Diese kann je nach Bedarf geöffnet oder geschlossen werden, um den ersten Luftstrom L1 zwischen der Kabine 18 und der Abluft zu steuern. Gleichzeitig gibt es zwischen der weiteren Zulufteinrichtung 26 für die Wärmeübertragungseinrichtung 20 und der Ablufteinrichtung 16 eine zweite Klappe 38, welche die präzise Kontrolle des zweiten Luftstroms L2 zwischen der Umgebung 13 und der Wärmeübertragungseinrichtung 20 ermöglicht.

Das Klappensystem 34 ist äußerst flexibel und bietet die Möglichkeit, die beiden Luftkreisläufe A und B je nach ausgewähltem Betriebsmodus einzeln oder in Kombination zu nutzen.

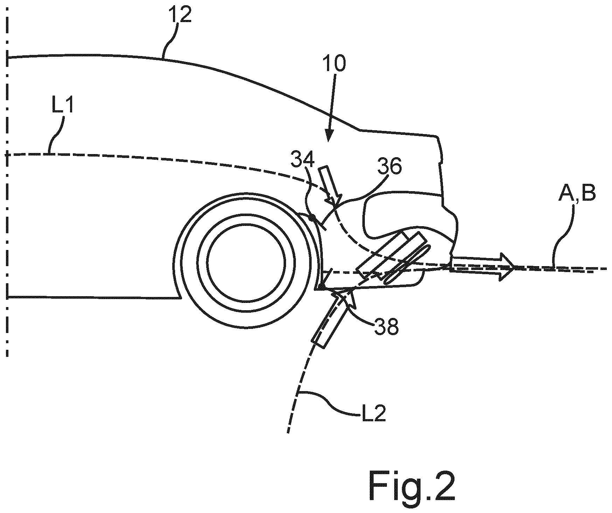

Fig. 2 zeigt den Heckbereich 12b des Kraftwagens 12 zur Veranschaulichung eines möglichen Klappensystems 34 des Temperierungssystems 10.

Das Klappensystem 34 besteht aus den zwei Klappen 36, 38, nämlich der ersten Klappe 36 und der zweiten Klappe 38. Diese Klappen 36, 38 sind für die Kontrolle und Lenkung der Luftströme L1, L2 in den beiden Luftkreisläufen A, B notwendig, die im Temperierungssystem 10 des Kraftwagens 12 vorgesehen sind.

Die erste Klappe 36 befindet sich zwischen der Kabine 18 des Kraftwagens 12 und der Ablufteinrichtung 16. Ihre Hauptfunktion besteht darin, den ersten Luftstrom L1 zwischen der Kabine 18 und der Abluft zu steuern. Diese Steuerung ermöglicht die Regulierung des Luftaustauschs zwischen der Kabine 18 und der Umgebung 13, wodurch die Temperierung der Kabine 18 reguliert bzw. beeinflusst wird. Die erste Klappe 36 kann entweder geöffnet, geschlossen oder in Zwischenstellungen sein, je nach den Anforderungen und den Betriebsbedingungen des Temperierungssystems 10.

Die zweite Klappe 38 ist zwischen der weiteren Zulufteinrichtung 26 für die Wärmeübertragungseinrichtung 20 und der Ablufteinrichtung 16 positioniert. Ihre Hauptaufgabe besteht darin, den zweiten Luftstrom L2 zwischen der weiteren Zulufteinrichtung 26 und der Abluft zu regulieren. Ähnlich wie bei der ersten Klappe 36 kann die zweite Klappe 38 geöffnet, geschlossen oder in Zwischenstellungen positioniert werden, um den zweiten Luftstrom L2 anzupassen. Die zweite Klappe 38 ist für die Steuerung des zweiten Luftstroms L2 im zweiten Luftkreislauf B notwendig.

Die Funktionalität und die Einstellungen der Klappen 36, 38 sind entscheidend für die Gesamtleistung des Temperierungssystems 10 im Kraftwagen 12. Die Flexibilität des Klappensystems 34 ermöglicht es somit, die Luftströme L1, L2 je nach den spezifischen Anforderungen und Betriebsmodi des Temperierungssystems 10 anzupassen.

### Bezugszeichenliste

- 10: Temperierungssystem
- 12: Kraftwagen
- 12a: Frontbereich
- 12b: Heckbereich
- 13: Umgebung
- 14: Kabinen-Zulufteinrichtung
- 16: Ablufteinrichtung
- 18: Kabine
- 20: Wärmeübertragungseinrichtung
- 22: Wärmepumpe
- 24: Wärmeübertragungsleitungen
- 26: Zulufteinrichtung
- 26a: Eingang
- 28: Unterboden
- 30: Antriebstrangs
- 31: Einlassöffnung
- 32: Außenhaut
- 34: Klappensystem
- 36: erste Klappe
- 38: zweite Klappe
- x: Fahrzeuglängsrichtung
- L1: Erster Luftstrom
- L2: Zweiter Luftstrom
- A: erster Luftkreis
- B: zweiter Luftkreis

## Patentansprüche

1. Temperierungssystem (10) für einen Kraftwagen (12), mit wenigstens einer Kabinen-Zulufteinrichtung (14) im Frontbereich (12a) und mit wenigstens einer Ablufteinrichtung (16) im Heckbereich (12) des Kraftwagens, mittels welchen ein erster Luftstrom (L1) aus der Umgebung (13) als Zuluft durch die Kabinen-Zulufteinrichtung (14) in eine Kabine (18) des Kraftwagens (12) zuführbar und als Abluft durch die Ablufteinrichtung (16) zur Schließung eines ersten Luftkreislaufs (A) zurück in die Umgebung (13) abführbar ist, und mit einer im Heckbereich (12b) angeordneten Wärmeübertragungseinrichtung (20), mittels welcher Wärme von der Ablufteinrichtung (16) aufnehmbar und mittels einer angeordneten Wärmepumpe (22) sowie angeordneten und korrespondierenden Wärmeübertragungsleitungen (24) des Temperierungssystems (10) zur Kabinen-Zulufteinrichtung (14) zurückführbar ist,
**dadurch gekennzeichnet, dass**
eine weitere Zulufteinrichtung (26) für die Wärmeübertragungseinrichtung (20), zur Aufnahme eines zweiten Luftstroms (L2) aus der Umgebung (13), im Heckbereich (12b) angeordnet ist und der weitere Luftstrom (L2) zur Schließung eines zweiten Luftkreislaufs (B) wieder in die Umgebung (13) abführbar ist.

2. Temperierungssystem (10) nach Anspruch 1,
**dadurch gekennzeichnet, dass**
der durch die weitere Zulufteinrichtung (26) zugeführte zweite Luftstrom (L2) durch die Ablufteinrichtung (16) in die Umgebung (13) des Kraftwagens (12) im Heckbereich abführbar ist.

3. Temperierungssystem (10) nach Anspruch 1 oder 2,
**dadurch gekennzeichnet, dass**
ein Ausgang für die Luftströme (L1, L2) an der Ablufteinrichtung (16) in Fahrzeuglängsrichtung (x) nach hinten gerichtet positioniert ist.

4. Temperierungssystem (10) nach einem der vorhergehenden Ansprüche,
**dadurch gekennzeichnet, dass**
ein Eingang (26a) für den zweiten Luftstrom (L2) an der weiteren Zulufteinrichtung (26) für die Wärmeübertragungseinrichtung (20) an einem Unterboden (28) des Kraftwagens (12) angeordnet ist.

5. Temperierungssystem (10) nach einem der vorhergehenden Ansprüche,
**dadurch gekennzeichnet, dass**
ein Eingang (26) für den zweiten Luftstrom (L2) an der weiteren Zulufteinrichtung (26) für die Wärmeübertragungseinrichtung (20) an einem Unterboden (28) im Bereich eines Antriebsstrangs (30) des Kraftwagens (12) angeordnet ist.

6. Temperierungssystem (10) nach einem der vorhergehenden Ansprüche,
**dadurch gekennzeichnet, dass**
ein Eingang (26) für den zweiten Luftstrom (L2) an der weiteren Zulufteinrichtung (26) für die Wärmeübertragungseinrichtung (20) als Einlassöffnungen (31) an einer Außenhaut (32) des Kraftwagens (12) ausgebildet ist.

7. Temperierungssystem (10) nach einem der vorhergehenden Ansprüche,
**dadurch gekennzeichnet, dass**
zwischen der Kabine (18) und der Ablufteinrichtung (16) eine erste Klappe (36) eines Klappensystems (34) angeordnet ist.

8. Temperierungssystem (10) nach Anspruch 7,
**dadurch gekennzeichnet, dass**
zwischen der weiteren Zulufteinrichtung (23) für die Wärmeübertragungseinrichtung (20) und der Ablufteinrichtung (16) eine zweite Klappe (38) des Klappensystems (34) angeordnet ist.

9. Temperierungssystem (10) nach Anspruch 7 oder 8,
**dadurch gekennzeichnet, dass**
mittels des Klappensystems (34) und in Abhängigkeit von ausgewählten Betriebsmodi die Anwendung der Luftkreisläufe (A, B) einzeln oder in Kombination anwendbar ist.

10. Verfahren zum Betreiben eines Temperierungssystems nach einem der vorhergehenden Ansprüche,
**dadurch gekennzeichnet, dass**
ein zweiter Luftstrom (L2) mittels einer weiteren Zulufteinrichtung (26) für die Wärmeübertragungseinrichtung (20) aus der Umgebung (13) des Kraftwagens (12) im Heckbereich (12b) aufgenommen und zur Schließung eines zweiten Luftkreislaufs (B) wieder in die Umgebung (13) abgeführt wird.
